# EUROPÄISCHE PATENTSCHRIFT

(11) **EP 2 083 491 B1**
(45) Veröffentlichungstag und Bekanntmachung des Hinweises auf die Patenterteilung: **12.12.2012**
(21) Anmeldenummer: 09000116.5
(22) Anmeldetag: 08.01.2009
(51) Int. Cl.: H02G 3/30, H02G 3/38

(54) **Leitungskanal für elektrische Leitungen**
Cable canal for electrical cables
Canal de guidage pour lignes électriques

(30) Priorität: 24.01.2008 DE 102008006916
(43) Veröffentlichungstag der Anmeldung: 29.07.2009
(73) Patentinhaber: OBO Bettermann GmbH & Co. KG, 58710 Menden (DE)
(72) Erfinder: Raschke, Jörg, 51674 Wiehl (DE); Ruhr, Siegfried, 51674 Wiehl (DE)
(74) Vertreter: Patentanwälte Ruff, Wilhelm, Beier, Dauster & Partner

(56) Entgegenhaltungen:
- EP-A1- 1 462 583
- DE-U1-202005 017 279
- GB-A- 2 147 352
- GB-A- 2 241 984

## Beschreibung

Die Erfindung betrifft einen Leitungskanal für elektrische Leitungen, mit einem Kanalkörper und wenigstens einem Stützfuß zum Aufsetzen auf einen Gebäudeboden, wobei der Stützfuß eine drehbar gelagerte Gewindestange, eine Fußplatte und ein mit dem Kanalkörper verbundenes Halteelement aufweist, und wobei die Gewindestange drehbar in der Fußplatte gelagert und ist mit einem Kupplungselement zum Angreifen eines Werkzeugs versehen.

Leitungskanäle für elektrische Leitungen werden beispielsweise in Bürogebäuden benötigt. Ein Leitungskanal wird auf den rohen Betonboden einer Geschoßdecke aufgesetzt und beim Aufbringen des Estrichs in diesen integriert. Damit nach Aufbringen des Estrichs die Oberkante des Leitungskanals bündig ist mit der Oberkante des Estrichs, muss der Leitungskanal in der Höhe einstellbar sein.

Bei bekannten Leitungskanälen ist daher eine Fußplatte und eine in der Fußplatte drehbar gelagerte Gewindestange vorgesehen. An einem Kanalkörper selbst greift dann ein Halteelement an, das mit einer Innengewindebohrung versehen ist, in die die Gewindestange eingedreht ist. Durch Drehen der Gewindestange kann dadurch der Leitungskanal in seiner Höhe verstellt werden. Bei langen Leitungskanälen ist eine solche Höheneinstellung problematisch, selbst wenn sie beispielsweise werkzeugunterstützt mit einem Akkuschrauber erfolgt. Die Verstellung über einen großen Höhenbereich ist aber immer schwierig, nicht zuletzt deshalb, da mehrere entlang des Leitungskanals aufeinanderfolgende Stützfüße nicht gleichzeitig verstellt werden können und daher mehrmals, um jeweils einen kleinen Höhenbereich, justiert werden müssen. Solche Leitungskanäle werden von der Anmelderin unter der Bezeichnung OKA hergestellt und vertrieben.

Aus der deutschen Gebrauchsmusterschrift DE 20 2005 017 279 U1 ist ein Leitungskanal für elektrische Leitungen mit einem Kanalkörper und wenigstens einem Stützfuß zum Aufsetzen auf einen Gebäudeboden bekannt, wobei der Stützfuß eine drehbar gelagerte Gewindestange, eine Fußplatte und ein mit dem Kanalkörper verbundenes Halteelement aufweist und wobei die Gewindestange drehbar in der Fußplatte gelagert ist und mit einem Schlitz zum Angreifen eines Schraubendrehers versehen ist. Ein Halteelement ist mittels einer Gewindebohrung in einer Unterseite des Kanalkörpers realisiert. Zum Einstellen der Höhe des Leitungskanals über dem Gebäudeboden kann in die Schlitze an der Stirnseite der Gewindestangen, die dann innerhalb des Kabelkanals liegen, angegriffen und die Gewindestangen können verdreht werden.

Aus der britischen Offenlegungsschrift GB 2 241 984 A ist eine Schnellverstellung bekannt, mit der beispielsweise von einer Decke abgehängte Rohre in ihrem Abstand zu der Decke eingestellt werden können. Hierzu ist eine Stange oder ein Gewindebolzen vorgesehen, der fest mit der Decke verbunden ist. Der Gewindebolzen wird von einer Halteklammer umgriffen, an der dann die Rohre befestigt werden können. Die Halteklammer ist mit einem Federteil versehen, das an einer Seite der Gewindestange angreift und die andere Seite der Gewindestange gegen zwei Rastvorsprünge drückt. Nach Aufbiegen des Federteils kann die gesamte Halteklammer zusammen mit den Rohren entlang der Gewindestange verschoben werden.

Aus der britischen Offenlegungsschrift GB 2 147 352 A ist eine einstellbare Anschlagmutter bekannt. Diese Anschlagmutter ist dafür vorgesehen, an einer Gewindestange einer Vertikalbohrmaschine montiert zu werden und dadurch eine Höhenbegrenzung für die Vertikalbohrmaschine bereitzustellen. Die Stockmutter soll die bekannten auf der Gewindestange verdrehbaren Rändelmuttern ersetzen. Die Stockmutter weist ein radial zur Gewindestange verschiebbares Eingreifteil auf, das an seinem, der Gewindestange zugewandten Ende mit einem Innengewinde versehen ist. Das Eingreifteil ist mittels einer Schraubenfeder gegen die Gewindestange vorgespannt.

Aus der europäischen Offenlegungsschrift EP 1 462 583 A1 ist ein höhenverstellbarer Kanalträger bekannt. Dieser Kanalträger weist ein U-artiges Federelement auf, durch dessen Schenkel sich ein Haltestab erstreckt, der wiederum fest mit einem Gebäudeboden verbunden ist. Durch Zusammendrücken der beiden Schenkel wird der Eingriff an der Haltestange gelöst und das Federelement kann entlang der Haltestange verschoben werden. Das Federelement und die Haltestange sind dafür vorgesehen, Verstelleinrichtungen, auf denen Einstellmuttern verdreht werden können, zu ersetzen.

Mit der Erfindung soll ein Leitungskanal für elektrische Leitungen geschaffen werden, der sich einfach und schnell in der Höhe einstellen lässt.

Erfindungsgemäß ist hierzu ein Leitungskanal für elektrische Leitungen mit einem Kanalkörper und wenigstens einem Stützfuß zum Aufsetzen auf einen Gebäudeboden vorgesehen, wobei der Stützfuß eine drehbar gelagerte Gewindestange, eine Fußplatte und ein mit dem Kanalkörper verbundenes Halteelement aufweist, bei dem an dem Halteelement ein radial zur Gewindestange verschiebbares Eingreifteil vorgesehen ist, das an seinem, der Gewindestange zugewandten Ende, mit einem Innengewinde versehen ist.

Durch Vorsehen eines radial zur Gewindestange verschiebbaren Eingreifteils, das an seinem, der Gewindestange zugewandten Ende mit einem Innengewinde versehen ist, wird eine Schnellverstellung der Höhe des Stützfußes möglich. Hierzu muss lediglich das Halteelement radial zur Gewindestange verschoben werden, bis das Innengewinde des Halteteils außer Eingriff mit dem Außengewinde der Gewindestange kommt. In dieser Lage kann dann das Eingreifteil und somit auch das Halteelement entlang der Gewindestange verschoben werden. Wenn die gewünschte Höhenposition erreicht ist, wird das Eingreifteil einfach wieder radial zurückverschoben, bis das Innengewinde an der Gewindestange eingreift. Das Innengewinde am Eingreifteil erstreckt sich vorteilhafterweise über einen Winkelbereich von maximal 180° oder es ist eine ovale Innengewindebohrung vorgesehen. Ovale Innengewindebohrungen können beispielsweise bei Spritzgussteilen realisiert werden. Unter einem Innengewinde sind im Rahmen dieser Anmeldung auch ein oder mehrere Eingreifvorsprünge zu verstehen, die in das Gewinde der Gewindestange eingreifen können und dadurch eine Relativverschiebung der Gewindestange und des Eingreifteils verhindern. Durch die erfindungsgemäße Schnellverstellung lässt sich auch ein sehr langer Kanal mit mehreren, hintereinander angeordneten Stützfüßen schnell und einfach in der Höhe verstellen, da auch das mehrfache Nachstellen um jeweils einen kleinen Höhenbereich problemlos vonstatten geht. Darüber hinaus ist bei der Erfindung auch noch eine Feineinstellung durch Drehung der Gewindestange möglich. Ein Benutzer kann also mittels der Schnellverstellung einen Leitungskanal grob auf die benötigte Höhe ausrichten. Dies kann durch Benutzung der Schnellverstellung mittels des radial verschiebbaren Eingreifteils geschehen. Zur Feinjustierung der Höhe, kann dann beispielsweise unter Zuhilfenahme einer Wasserwaage die Gewindestange relativ zum Halteelement verdreht werden.

Auf diese Weise kann eine Feineinstellung beispielsweise mittels eines Akkuschraubers im montierten Zustand erfolgen. Als Kupplungselement kann im einfachsten Fall ein Schraubenschlitz oder ein Kreuzschlitz vorgesehen sein, speziell an dem dem Gebäudeboden gegenüberliegenden Ende der Gewindestange. Ein geeignetes Kupplungselement kann aber auch an geeigneter Stelle im Verlauf der Gewindestange angeordnet sein.

In Weiterbildung der Erfindung ist das Eingreifteil in eine Position vorgespannt, in der das Innengewinde mit dem Außengewinde der Gewindestange eingreift.
Auf diese Weise kann der Leitungskanal in besonders einfacher Weise in der Höhe verstellt werden, da die Höhenverstellung selbsttätig arretiert. Das Eingreifteil wird zurückgezogen, so dass eine Höheneinstellung erfolgen kann. Durch einfaches Loslassen des Eingreifteils wird der Stützfuß dann in der gewünschten Höhe arretiert.

In Weiterbildung der Erfindung ist das Eingreifteil mit wenigstens einem Griffelement, insbesondere für eine menschliche Hand, versehen.

Durch Vorsehen eines Griffelements, das beispielsweise aus einer Rändelung am Eingreifteil bestehen kann, wird die einfache händische Verstellung ermöglicht. Der erfindungsgemäße Leitungskanal kann damit werkzeuglos in der Höhe verstellt werden. Dies ist insbesondere bei der Arbeit auf Baustellen von Vorteil, beispielsweise dann, wenn eine grobe Höheneinstellung des Leitungskanals und eine Feineinstellung von unterschiedlichen Personen ausgeführt werden.

In Weiterbildung der Erfindung weist das Griffelement wenigstens einen seitlich vom Eingreifteil abragenden Greifvorsprung auf.

Ein solcher Greifvorsprung erleichtert das radiale Verschieben des Eingreifteils weiter. Beispielsweise sind an gegenüberliegenden Seiten des Eingreifteils jeweils ein Greifvorsprung vorgesehen, so dass das Griffelement mit zwei Fingern zurückgezogen werden kann.

In Weiterbildung der Erfindung weist das Halteteil eine Auflagefläche auf, die im eingerückten Zustand des Eingreifteils in radialer Richtung von der Gewindestange weg gesehen hinter dem Eingreifteil liegt.

Eine solche Anordnung einer Auflagefläche ermöglicht es, eine Abstützung für einen Finger zu schaffen und das radiale Verschieben des Eingreifteils weiter zu erleichtern. Beispielsweise kann der Daumen an die Auflagefläche angelegt werden, Zeigefinger und Mittelfinger greifen dann an gegenüberliegenden Greifvorsprüngen am Eingreifteil an und das Eingreifteil kann in sehr einfacher und müheloser Weise außer Eingriff mit der Gewindestange gebracht werden. Eine Greifvertiefung kann dazu verwendet werden, mittels eines oder mehrerer Finger das Eingreifteil zurückzuziehen. Eine Greifvertiefung kann darüber hinaus zusätzlich oder alternativ selbstverständlich auch für ein Werkzeug, beispielsweise einen Schraubendreher, vorgesehen sein.

In Weiterbildung der Erfindung weist das Außengewinde der Gewindestange und/oder das Innengewinde des Eingreifteils wenigstens eine Flanke mit einem Flankenwinkel zwischen 0° und 5°, insbesondere 0°, oder weniger als 0° auf.

Ein Flankenwinkel von 0° entspricht dabei einer Ausrichtung der Gewindeflanke senkrecht zur Mittellängsachse der Gewindestange. Erfindungsgemäß wird diejenige Flanke des Gewindes in einem Winkel von 0° bis 5° oder weniger als 0° ausgerichtet, die bei Belastung des Leitungskanals in Richtung auf den Gebäudeboden zu die Kraft überträgt. Durch eine solche Ausbildung dieser belasteten Gewindeflanke kann bei Belastung des Leitungskanals keine bzw. eine sehr geringe radial gerichtete Kraft weg von der Gewindestange am Eingreifteil auftreten, die das Eingreifteil ausrücken könnte. Die spezielle erfindungsgemäße Ausbildung der Gewinde erlaubt es daher, verlässlich große Kräfte über das Eingreifteil zu übertragen. Dies ist beispielsweise beim Baustellenbetrieb von großer Bedeutung, da nicht ausgeschlossen werden kann, dass der Leitungskanal im montierten und noch nicht im Estrich vergossenen Zustand belastet wird, sei es nur aus Unachtsamkeit durch Betreten.

In Weiterbildung der Erfindung weist der Kanalkörper wenigstens ein in Längsrichtung des Leitungskanals verlaufendes Profil mit wenigstens einer Befestigungsnut auf, in der das Halteelement befestigt ist.

Auf diese Weise ist das Halteelement längsverschiebbar in dem Profil am Kanalkörper aufgenommen. Das Halteelement ist darüber hinaus unmittelbar am Kanalkörper festgelegt. Erfindungsgemäß ist es dennoch möglich, die Höhe des Stützfußes im eingebauten Zustand zu verändern. Durch Vorsehen des Profils am Kanalkörper können beispielsweise auch zusätzliche Stützfüße nachträglich am Kanalkörper angeordnet werden.

In Weiterbildung der Erfindung ist das Eingreifteil in einer Längsführung am Halteteil geführt.

Eine Längsführung am Halteteil ermöglicht ein präzises Verschieben des Eingreifteils relativ zur Gewindestange und ermöglicht auch einen gleichmäßigen Eingriff des Innengewindes am Eingreifteil und des Gewindes der Gewindestange.

In Weiterbildung der Erfindung ist die Längsführung ausgebildet, das Eingreifteil mit einer Bewegungskomponente senkrecht zur Verschieberichtung auf der Längsführung in die Längsführung einzusetzen und aus der Längsführung zu entnehmen.

Auf diese Weise wird die Montage des erfindungsgemäßen Leitungskanals erleichtert, da das Eingreifteil in einfacher Weise in die Längsführung eingesetzt werden kann. Um eine Vorspannung des Eingreifteils in Richtung auf die Gewindestange zu erreichen, muss dann beispielsweise lediglich noch eine Spiralfeder eingesetzt werden.

In Weiterbildung der Erfindung weist die Längsführung wenigstens eine in Bezug auf eine radiale Verstellrichtung seitlich abragende Führungsschiene auf, die abschnittsweise von Führungselementen des Eingreifteils umgriffen wird, wobei die seitlich abragende Führungsschiene wenigstens eine Unterbrechung aufweist, um die Führungselemente mit dem Eingreifteil aus- und/oder einzuführen.

Durch Vorsehen von Unterbrechungen in der oder den seitlich abragenden Führungsschienen kann das Eingreifteil in einfacher Weise eingesetzt werden. Das Entnehmen des Eingreifteils kann dann dadurch erreicht werden, dass die Führungselemente des Eingreifteils in den Bereich dieser Unterbrechungen gebracht werden. Beispielsweise kann im Bereich eines Endes der Führungsschiene, das der Gewindestange abgewandt ist, ein Endanschlag vorgesehen sein und angrenzend an diesen Endanschlag können Unterbrechungen bzw. Ausnehmungen in der Führungsschiene vorgesehen sein, um das Eingreifteil in die Führungsschiene einsetzen zu können. Vorteilhafterweise ist das Eingreifteil unverlierbar an der Längsführung gehalten, beispielsweise dadurch, dass die Schraubenfeder auf Block geht, bevor Führungsvorsprünge des Eingreifteils unterhalb von Ausnehmungen in Führungsleisten der Längsführung zu liegen kommen und das Eingreifteil aus der Längsführung entnommen werden könnte. Bei der Montage des Eingreifteils muss dieses daher zunächst auf die Längsführung aufgesetzt werden und erst dann kann die Spiralfeder eingesetzt werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine perspektivische Ansicht eines Stützfußes für einen erfindungsgemäßen Leitungskanal,
- Fig. 2: eine perspektivische, abschnittsweise Darstellung eines erfindungsgemäßen Leitungskanals mit dem Stützfuß der Fig. 1,
- Fig. 3: eine Schnittansicht des Stützfußes der Fig. 1 im eingerückten Zustand,
- Fig. 4: eine Schnittansicht des Stützfußes der Fig. 1 im ausgerückten Zustand,
- Fig. 5: eine vergrößerte, abschnittsweise Darstellung der Schnittansicht der Fig. 3,
- Fig. 6: eine Ansicht des Eingreifteils von unten,
- Fig. 7: eine Ansicht des Halteteils von unten,
- Fig. 8: eine Ansicht des Halteteils mit daran montierten Eingreifteil von unten und
- Fig. 9: das Halteteil der Fig. 6 in einer Ansicht von schräg unten.

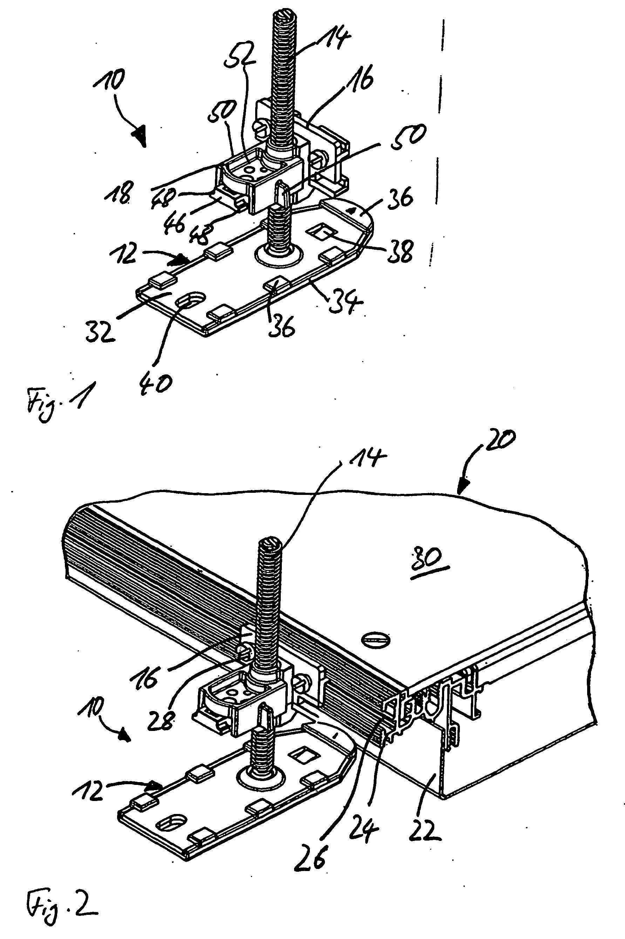

In der Darstellung der Fig. 1 ist ein Stützfuß 10 zu erkennen, der eine Fußplatte 12, eine Gewindestange 14 und ein zur Anordnung an einem in Fig. 1 nicht dargestellten Leitungskanalkörper vorgesehenes Halteelement 16 aufweist. Auf dem Halteelement 16 ist ein Eingreifteil 18 verschiebbar angeordnet und das Eingreifteil 18 kann radial auf die Gewindestange 14 zu und von dieser weg verschoben werden.

Die Darstellung der Fig. 2 zeigt den Stützfuß 10 im montierten Zustand an einem Leitungskanal 20. Der Leitungskanal 20 ist lediglich abschnittsweise dargestellt und weist ein U-förmiges Bodenprofil 22 auf, in dem elektrische Leitungen angeordnet werden. An das Bodenprofil 22 und speziell an dessen hochragenden Schenkel schließt sich eine Profilleiste 24 an, die mit zahlreichen Nuten zum Anordnen von beispielsweise Dichtungen, Kanalunterteilungen, Estrichankern und dergleichen versehen ist. Die Profilleiste 24 weist darüber hinaus auch eine zur Seite hin offene Befestigungsnut 26 auf, die einen Hinterschnitt bildet und in der das Halteteil 16 befestigt werden kann. Das Halteteil 16 ist mittels Schrauben 28 in der Nut 26 festgesetzt und kann entlang der Nut 26 verschoben werden. Der Leitungskanal 20 ist darüber hinaus mit einer Deckplatte 30 versehen, die zwischen zwei benachbarten Profilleisten 24 angeordnet ist und die mittels Schrauben auf den Profilleisten gehalten wird.

Der Leitungskanal 20 ist als sogenannter estrichbündiger Leitungskanal ausgebildet. Zur Montage des Leitungskanals 20 wird dieser mit daran angebrachten Stützfüßen 10 auf einen Gebäudeboden eines Rohbaus aufgesetzt. Die Fußplatte 12 sitzt dann unmittelbar auf der Gebäudedecke auf und wird an dieser beispielsweise mittels Nägeln oder Schrauben befestigt. Die Oberkante des Leitungskanals, also die Deckplatte 30 und die zur Deckplatte 30 fluchtenden Oberseiten der Profilleisten 24, werden dann auf die geplante Oberkante eines auszubringenden Estrichs justiert. Nach der Justierung wird zunächst ein eventuell überstehendes Ende der Gewindestange 14 gekürzt. Anschließend wird der Estrich vergossen, so dass der vollständige Stützfuß 10 in den Estrich eingebettet ist. Die Deckplatte 30 ist ja lediglich bündig mit der Estrichoberseite und kann infolgedessen auch nach Vergießen des Estrichs noch geöffnet werden, um elektrische Leitungen zu verlegen.

Die Fußplatte 12 ist zweiteilig aufgebaut und besteht aus einer Blechplatte 32 und einer Kunststoffunterlage 34, in die die Blechplatte 32 eingeschoben ist. Um die Blechplatte 32 in ihrer in Fig. 1 dargestellten Lage auf der Kunststoffunterlage 34 zu halten, weist die Kunststoffunterlage 34 Vorsprünge 36 auf, die sich ein Stück weit über die Oberfläche der Blechplatte 32 erstrecken und dadurch eine Art Tasche bilden, in die die Blechplatte 32 eingeschoben werden kann. Die Kunststoffunterlage 34 ist darüber hinaus mit einer federnden Rastnase 38 versehen, die im vollständig eingeschobenen Zustand der Blechplatte 32 in eine passende Ausnehmung in der Blechplatte 32 einschnappt. Im vollständig eingeschobenen Zustand der Blechplatte 32 ist eine Durchgangsöffnung 40 in der Fußplatte 12 gebildet, durch die eine Befestigungsschraube durchgesteckt werden kann.

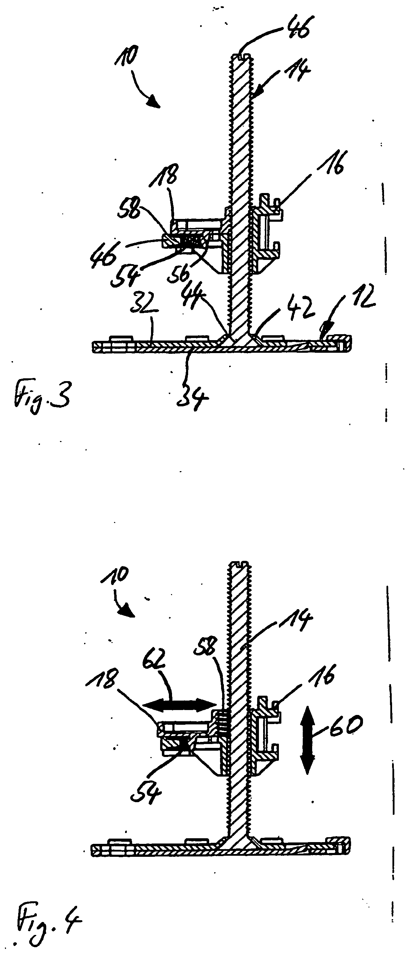

Wie in der Darstellung der Fig. 3 zu erkennen ist, weist die Blechplatte 32 eine kegelstumpfförmige Erhebung 42 auf, die an ihrem oberen Ende mit einer Durchgangsöffnung versehen ist. Zusammen mit der Kunststoffunterlage 34 wird dadurch eine kegelstumpfförmige Ausnehmung für die Aufnahme eines ebenfalls kegelstumpfförmigen Fußteils 44 der Gewindestange geschaffen. Wie Fig. 3 zu entnehmen ist, ist die Gewindestange 14 dadurch drehbar an der Fußplatte 12 befestigt. Die Gewindestange 14 weist an ihrem, der Fußplatte 12 gegenüberliegenden Ende einen Schraubenschlitz 46 auf. Nach Ansetzen eines Schraubendrehers kann die Gewindestange 14 somit relativ zur Fußplatte 12 und relativ zum Halteteil 16 verdreht werden. Dadurch kann das Eingreifteil 18 und mit diesem das Halteteil 16 entlang der Gewindestange bewegt werden.

Wie anhand der Fig. 1 bis 3 zu erkennen ist, ist das Eingreifteil 18 in einer Längsführung 46 am Halteteil 16 angeordnet. Die Längsführung 46 ist senkrecht zur Gewindestange 14 angeordnet und ermöglicht dadurch die radiale Verschiebung des Eingreifteils 18 auf die Gewindestange 14 zu und von dieser weg. Die Längsführung 46 weist zu beiden Seiten Führungsleisten 48 auf, die von dem Halteteil 18 umgriffen werden und die in Fig. 2 lediglich abschnittsweise zu erkennen sind. Das Halteteil 18 umgreift die Führungsleisten 48. Hierzu sind an den gegenüberliegenden Seitenwänden des Eingreifteils 48 jeweils zwei Führungsvorsprünge vorgesehen. Die Führungsleiste erstreckt sich im Wesentlichen über die gesamte Länge der Längsführung 46, also annähernd bis zur Gewindestange 14. Die Führungsleiste 48 ist aber mit Unterbrechungen versehen und in den Fig. 1 und 2 ist unmittelbar anschließend an den Anfang der Leiste 48 eine solche Unterbrechung der Führungsleiste 48 zu erkennen. Werden die Führungsvorsprünge des Eingreifteils 18 unterhalb dieser Unterbrechungen angeordnet, so kann das Eingreifteil 18 in der Darstellung der Fig. 1 nach oben gekippt und aus der Längsführung 46 entnommen werden. Auch wenn während der Benutzung des Leitungskanals 20 das Entnehmen des Eingreifteils 18 nicht unbedingt vorgesehen ist, so kann in umgekehrter Reihenfolge natürlich auch das Eingreifteil 18 in die Längsführung 46 eingeführt werden, was die Montage des Stützfußes 10 erheblich erleichtert.

Das Eingreifteil 18 ist an gegenüberliegenden Seiten mit jeweils einem Greifvorsprung 50 versehen, die von den Seitenflächen des Eingreifteils 18 abragen. Diese Greifvorsprünge 50 erleichtern das radiale Verschieben des Eingreifteils 18 relativ zur Gewindestange 14. Beispielsweise kann der Daumen auf das freie Ende der Längsführung 46 gelegt werden, das im eingerückten Zustand des Eingreifteils 18 über dieses hinaus ragt. Mit Zeigefinger und Mittelfinger werden dann die beiden Greifvorsprünge 50 ergriffen und das Eingreifteil 18 kann in einfacher Weise von der Gewindestange 14 weggezogen werden. Hierdurch gerät ein Innengewinde am Eingreifteil 18 außer Eingriff mit dem Außengewinde der Gewindestange 14 und das Eingreifteil 18 kann zusammen mit dem Halteteil 16 und dem Leitungskanal 20 relativ zur Fußplatte 12 entlang der Gewindestange 14 verschoben werden.

Das Eingreifteil 18 ist auf seiner, der Längsführung 46 abgewandten Seite darüber hinaus mit einer Greifvertiefung 52 versehen. In diese Greifvertiefung kann beispielsweise ein Finger oder ein Werkzeug eingelegt werden und das Eingreifteil kann dann einfach und bequem entlang der Längsführung verschoben werden. Das der Gewindestange 14 abgewandte Ende der Greifvertiefung 52 ist daher konvex gekrümmt gestaltet, um eine ergonomische Anlagefläche für einen menschlichen Finger zu schaffen.

In der Darstellung der Fig. 3 ist zu erkennen, dass das Eingreifteil 18 entlang der Längsführung 46 und in Richtung auf die Gewindestange 14 zu mittels einer Spiralfeder 54 vorgespannt ist. Die Spiralfeder 54 stützt sich einerseits an der Längsführung 46 und andererseits an einem Vorsprung 56 des Eingreifteils 18 ab. Die Längsführung 46 ist hierzu mit einem mittig angeordneten Langloch versehen, in dem der Vorsprung 56 bewegt werden kann. In dieses Langloch hinein ragt am Ende der Längsführung 46 ein Dorn 78, auf den die Spiralfeder 54 aufgeschoben ist.

Wie in Fig. 2 und 3 weiter zu erkennen ist, ist das Eingreifteil 18 an seinem, der Gewindestange 14 zugewandten Ende mit einer halbkreiszylinderförmigen Rinne versehen, die parallel zur Gewindestange 14 ausgerichtet ist. Diese Rinne trägt ein Innengewinde, das in dem in Fig. 3 dargestellten Zustand mit dem Außengewinde der Gewindestange 14 eingreift. In der in Fig. 3 dargestellten Position ist das Eingreifteil somit eingerückt und das Halteteil 16 ist in seiner Position an der Gewindestange 14 festgelegt. Es ist in der in Fig. 3 dargestellten Position aber möglich, die Gewindestange 14 zu drehen. Bei einer Drehung der Gewindestange 14 wird sich infolgedessen das Eingreifteil 18 und damit auch das Halteteil 16 und der daran befestigte Leitungskanal 20 entlang der Gewindestange 14 nach oben oder unten bewegen. Auf diese Weise kann eine Feineinstellung der Höhenposition des Leitungskanals 20 vorgenommen werden.

Um eine Schnellverstellung des Leitungskanal 20 entlang der Gewindestange 14 zu erreichen, muss das Eingreifteil 18 radial von der Gewindestange 14 weg bewegt werden, bis es eine ausgerückte Position einnimmt. Eine solche Position ist in der Schnittansicht der Fig. 4 dargestellt. Es ist in der Darstellung der Fig. 4 zu erkennen, dass das Innengewinde 58 am Eingreifteil 18 nicht mehr in Eingriff mit dem Außengewinde der Gewindestange 14 steht. Das Eingreifteil 18 und mit diesem zusammen auch das Halteteil 16 können somit entlang dem Doppelpfeil 60 nach oben oder unten entlang der Gewindestange 14 bewegt werden. Um eine erreichte Höhenstellung zu arretieren, muss das Eingreifteil 18 lediglich losgelassen werden und unter der Wirkung der Feder 54 wird es sich wieder auf die Gewindestange 14 zu bewegen, bis das Innengewinde 58 mit der Gewindestange 14 eingreift. Durch Bewegen des Eingreifteils 18 in Richtung auf die Gewindestange 14 zu oder von dieser weg, entsprechend dem Doppelpfeil 62, kann die Schnellverstellung des Stützfußes 10 somit ein- oder ausgerückt werden.

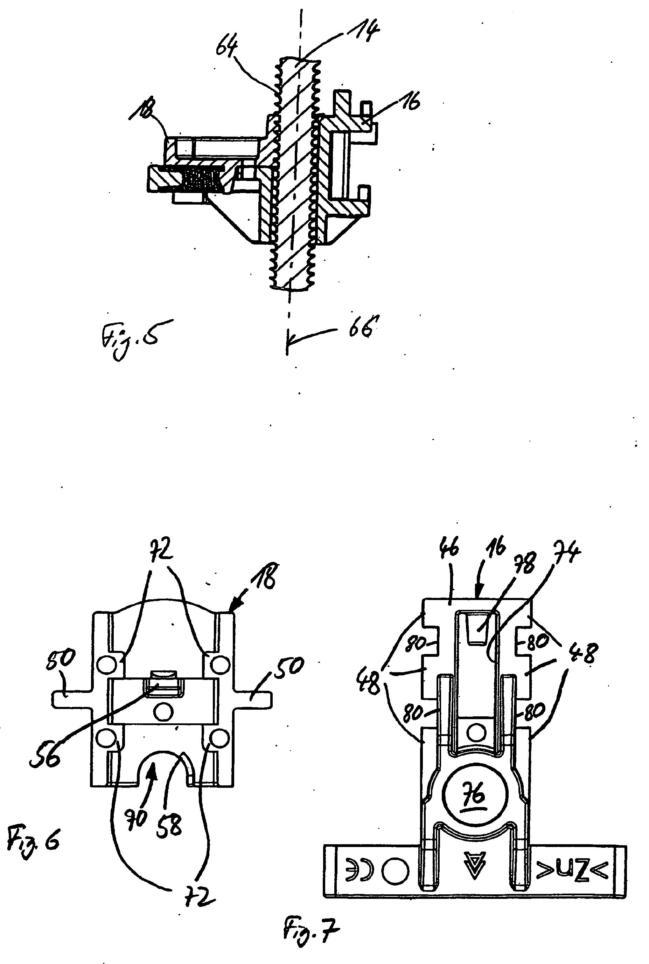

In der Schnittansicht der Fig. 5 ist der Stützfuß 10 der Fig. 3 abschnittsweise und vergrößert dargestellt. Das Eingreifteil 18 befindet sich in der Darstellung der Fig. 5 in der eingerückten Position. Es ist zu erkennen, dass das Gewinde der Gewindestange 14 in spezieller Weise ausgebildet ist und speziell ist die nach oben gerichtete Gewindeflanke der Gewindestange 14 senkrecht zu einer Mittellängsachse 66 der Gewindestange 14 ausgerichtet. Bei dem Innengewinde am Eingreifteil 18 ist ebenfalls die oben liegende Gewindeflanke senkrecht zur Mittellängsachse der Gewindestange 14 ausgerichtet. Die jeweils oben liegenden Gewindeflanken sind somit in einem Winkel von 0° zur Senkrechten auf die Mittellängsachse 66 der Gewindestange 14 angeordnet. Die jeweils gegenüberliegenden Gewindeflanken sind dahingegen in einem Winkel von weniger als 90° zur Mittellängsachse 66 der Gewindestange 14 ausgerichtet.

Wird beispielsweise die Deckplatte 30 des Leitungskanals 20 belastet, so wird das Halteteil 16 in der Darstellung der Fig. 5 nach unten gedrückt und infolgedessen wird auch vom Innengewinde 58 des Eingreifteils 18 eine nach unten gerichtete Kraft auf die oben liegende Flanke 64 des Gewindes der Gewindestange 14 ausgeübt. Da die obere Flanke des Innengewindes 58 und die obere Flanke 64 des Gewindes der Gewindestange 14 dann senkrecht zur Mittellängsachse 66 und somit auch senkrecht zur beaufschlagenden Kraft liegen, entsteht keine, das Eingreifteil 18 radial von der Gewindestange weg verschiebende Kraft. Durch das Herunterdrücken des Halteteils 16 und des Eingreifteils 18 kann somit das Eingreifteil 18 nicht ausgerückt werden, sondern hält vielmehr zuverlässig seine Lage an der Gewindestange 14 und in Eingriff mit dem Gewinde der Gewindestange 14.

In der Darstellung der Fig. 6 ist das Eingreifteil 18 in einer Ansicht von unten dargestellt. Gut zu erkennen sind die beiden seitlich abragenden Greifvorsprünge 50 sowie die mit dem Innengewinde 58 versehene Rinne 70.

Das Eingreifteil 18 ist mit Führungsvorsprüngen 72 versehen, die von den Seitenwänden des Eingreifteils, an denen die Greifvorsprünge 50 angeordnet sind, nach innen vorragen und dadurch eine Art Tasche bilden, indem die Längsführung 46 des Halteteils aufgenommen werden kann. Innerhalb dieser Tasche ist der Vorsprung 56 zu erkennen, der in das Langloch in der Längsführung 46 vorragt und als Anlagepunkt für die Schraubenfeder 54 dient.

Die Darstellung der Fig. 7 zeigt das Halteteil 16 und es ist speziell das Langloch 74 in der Längsführung 46 zu erkennen, in das der Vorsprung 56 vorragt. Das Halteteil 16 ist mit einer Durchgangsbohrung 76 versehen, durch das sich im montierten Zustand die Gewindestange 14 erstreckt und das als Führung für das Halteteil 16 an der Gewindestange 14 dient. In das Langloch 74 hinein erstreckt sich von dessen, der Bohrung 76 entfernt liegenden Ende ein Dorn 78, auf den die Schraubenfeder 54 aufgeschoben wird.

Gut zu erkennen ist in der Darstellung der Fig. 7 die Ausbildung der Führungsleisten 48. Zu beiden Seiten des Halteteils 16 ist jeweils eine Führungsleiste 48 angeordnet und jede dieser Führungsleiste 48 ist mit Unterbrechungen oder Ausnehmungen 80 versehen. Die Ausnehmungen 80 sind dabei auf Anordnung und Form der Führungsvorsprünge 72 im Halteteil 18 abgestimmt. Wird das Eingreifteil 18 mit seinen Führungsvorsprüngen 72 über die Ausnehmungen 80 gebracht, so kann das Eingreifteil auf die Längsführung 46 aufgesetzt werden. Sobald das Eingreifteil 18 dann nur ein Stück weit auf der Längsführung 46 verschoben ist, ist dieses mittels der Führungsvorsprünge 72 und der Führungsleisten 48 lediglich noch entlang der Längsführung 46 verschiebbar am Halteteil 16 befestigt.

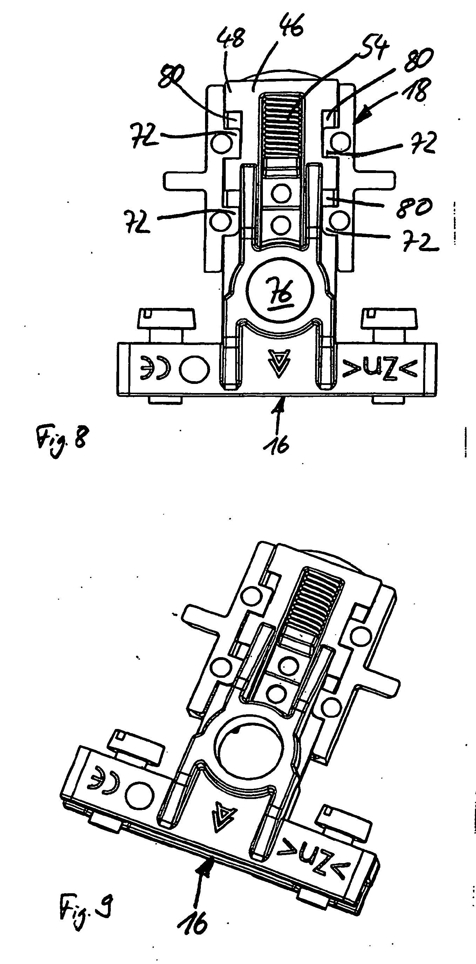

In der Darstellung der Fig. 8 ist das Halteteil 16 mit daran montiertem Eingreifteil 18 zu erkennen. Die Schraubenfeder 54 ist in der in Fig. 8 dargestellten, maximal von der Bohrung 76 und damit der Gewindestange 14 entfernten Position des Eingreifteils 18 bereits auf Block, so dass das Eingreifteil 18 also nicht weiter von der Bohrung 76 entfernt werden kann. In der Darstellung der Fig. 8 ist das die Richtung nach oben. Wie zu erkennen ist, befinden sich die Führungsvorsprünge 72 des Halteteils 18 in dieser Endposition des Eingreifteils 18 noch nicht unterhalb der Ausnehmungen 80 in den Führungsleisten 48. Das Eingreifteil 18 ist somit unverlierbar auf der Längsführung 46 befestigt. Um das Eingreifteil 18 wieder von der Längsführung 46 zu entfernen, muss somit zunächst die Spiralfeder 54 entfernt werden. Umgekehrt muss bei der Montage des Eingreifteils 18 auf der Längsführung 46 dieses zunächst auf die Längsführung 46 aufgesetzt werden und erst dann kann die Spiralfeder 54 montiert werden.

Die Darstellung der Fig. 9 zeigt das Halteteil 16 der Fig. 8 von schräg unten und in dieser perspektivischen Ansicht sind Einzelheiten der Fig. 8 ebenfalls und zum Teil besser zu erkennen.

## Patentansprüche

1. Leitungskanal für elektrische Leitungen mit einem Kanalkörper (20) und wenigstens einem Stützfuß (10) zum Aufsetzen auf einen Gebäudeboden, wobei der Stützfuß (10) eine drehbar gelagerte Gewindestange (14), eine Fußplatte (12) und ein mit dem Kanalkörper (20) verbundenes Halteelement (16) aufweist, und wobei die Gewindestange (14) drehbar in der Fußplatte (12) gelagert ist und mit einem Kupplungselement (46) zum Angreifen eines Werkzeugs versehen ist, **dadurch gekennzeichnet, dass** an dem Halteelement (16) ein radial zur Gewindestange (14) verschiebbares Eingreifteil (18) vorgesehen ist, das an seinem, der Gewindestange (14) zugewandten Ende mit einem Innengewinde (58) versehen ist.

2. Leitungskanal nach Anspruch 1, **dadurch gekennzeichnet, dass** das Eingreifteil (18) in eine Position vorgespannt ist, in der das Innengewinde (58) mit dem Außengewinde der Gewindestange (14) eingreift.

3. Leitungskanal nach einem der vorstehenden Ansprüche, **dadurch gekennzeichnet, dass** das Eingreifteil (18) mit wenigstens einem Griffelement, insbesondere für eine menschliche Hand, versehen ist.

4. Leitungskanal nach Anspruch 3, **dadurch gekennzeichnet, dass** das Griffelement wenigstens einen seitlich vom Eingreifteil abragenden Greifvorsprung (50) aufweist.

5. Leitungskanal nach Anspruch 4, **dadurch gekennzeichnet, dass** das Halteteil (16) eine Auflagefläche aufweist, die im eingerückten Zustand des Eingreifteils in radialer Richtung von der Gewindestange (14) weg gesehen hinter dem Eingreifteil (18) liegt.

6. Leitungskanal nach Anspruch 3, 4 oder 5, **dadurch gekennzeichnet, dass** das Griffelement eine Greifvertiefung (52), insbesondere für einen oder mehrere menschliche Finger, aufweist.

7. Leitungskanal nach wenigstens einem der vorstehenden Ansprüche, **dadurch gekennzeichnet, dass** das Außengewinde der Gewindestange (14) und/oder das Innengewinde (58) des Eingreifteils (18) wenigstens eine Flanke mit einem Flankenwinkel von 0° bis 5°, insbesondere 0°, oder weniger als 0° aufweist.

8. Leitungskanal nach wenigstens einem der vorstehenden Ansprüche, **dadurch gekennzeichnet, dass** der Kanalkörper (20) wenigstens ein in Längsrichtung des Leitungskanals verlaufendes Profil (24) mit wenigstens einer Befestigungsnut (26) aufweist, in der das Halteelement befestigt ist.

9. Leitungskanal nach wenigstens einem der vorstehenden Ansprüche, **dadurch gekennzeichnet, dass** das Eingreifteil (18) in einer Längsführung (46) am Halteteil (16) geführt ist.

10. Leitungskanal nach Anspruch 9, **dadurch gekennzeichnet, dass** die Längsführung (46) ausgebildet ist, das Eingreifteil (18) mit einer Bewegungskomponente senkrecht zur Verschieberichtung auf der Längsführung (46) in die Längsführung (46) einzusetzen und aus der Längsführung (46) zu entnehmen.

11. Leitungskanal nach Anspruch 10, **dadurch gekennzeichnet, dass** die Längsführung (46) wenigstens eine in Bezug auf eine radiale Verstellrichtung seitlich abragende Führungsschiene aufweist, die abschnittsweise von Führungselementen des Eingreifteils umgriffen wird, wobei die seitlich abragende Führungsschiene wenigstens eine Unterbrechung aufweist, um die Führungselemente mit dem Eingreifteil (18) aus- und/oder einzuführen.

## Claims

1. Cable duct for electrical cables having a duct body (20) and at least one support base (10) for placing on a building floor, where said support base (10) has a rotatably mounted threaded rod (14), a baseplate (12) and a holding element (16) connected to the duct body (20), and where the threaded rod (14) is rotatably mounted in the baseplate (12) and provided with a coupling element (46) for engaging a tool, **characterized in that** an engaging part (18) radially movable relative to the threaded rod (14) is provided on the holding element (16) and is provided at its end facing said threaded rod (14) with an internal thread (58).

2. Cable duct according to Claim 1, **characterized in that** the engaging part (18) is pretensioned into a position in which the internal thread (58) engages with the external thread of the threaded rod (14).

3. Cable duct according to one of the preceding claims, **characterized in that** the engaging part (18) is provided with at least one grip element, in particular for a human hand.

4. Cable duct according to Claim 3, **characterized in that** the grip element has at least one gripping protrusion (50) laterally projecting from the engaging part.

5. Cable duct according to Claim 4, **characterized in that** the holding element (16) has a contact surface which is behind the engaging part (18) in the engaged state of said engaging part looking away from the threaded rod (14) in the radial direction.

6. Cable duct according to Claim 3, 4 or 5, **characterized in that** the grip element has a gripping recess (52), in particular for one or more human fingers.

7. Cable duct according to at least one of the preceding claims, **characterized in that** the external thread of the threaded rod (14) and/or the internal thread (58) of the engaging part (18) has at least one flank with a flank angle of 0° to 5°, in particular 0°, or less than 0°.

8. Cable duct according to at least one of the preceding claims, **characterized in that** the duct body (20) has at least one section (24) running in the longitudinal direction of the cable duct with at least one fastening groove (26) inside which the holding element is fastened.

9. Cable duct according to at least one of the preceding claims, **characterized in that** the engaging part (18) is guided inside a longitudinal guide (46) on the holding element (16).

10. Cable duct according to Claim 9, **characterized in that** the longitudinal guide (46) is designed for inserting the engaging part (18) into said longitudinal guide (46) and to remove it from said longitudinal guide (46) by a movement vertical to the displacement direction on said longitudinal guide (46).

11. Cable duct according to Claim 10, **characterized in that** the longitudinal guide (46) has at least one guide rail laterally projecting relative to a radial adjustment direction and enclosed in some sections by guide elements of the engaging part, where the laterally projecting guide rail has at least one interruption for removing and/or inserting the guide elements with the engaging part (18).

## Revendications

1. Conduit pour câbles électriques avec un corps de conduit (20) et au moins un pied d'appui (10) destiné à être placé sur le sol d'un bâtiment, sachant que le pied d'appui (10) présente une tige filetée tournante (14), une plaque d'assise (12) et un élément de maintien (16) relié au corps de conduit (20), et que la tige filetée (14) tourne dans la plaque d'assise (12) et est dotée d'un élément d'accouplement (46) permettant d'appliquer un outil, **caractérisé en ce qu'**une pièce d'engagement (18) mobile radialement par rapport à la tige filetée (14) est prévue sur l'élément de maintien (16), et que ladite pièce d'engagement (18) est dotée d'un filet intérieur (58) au niveau de son extrémité orientée vers la tige filetée (14).

2. Conduit selon la revendication 1, **caractérisé en ce que** la pièce d'engagement (18) est précontrainte dans une position dans laquelle le filet intérieur (58) s'engage dans le filet extérieur de la tige filetée (14).

3. Conduit selon au moins l'une des revendications précédentes, **caractérisé en ce que** la pièce d'engagement (18) est dotée d'au moins un élément de préhension, en particulier pour une main humaine.

4. Conduit selon la revendication 3, **caractérisé en ce que** l'élément de préhension présente au moins une ailette de préhension (50) faisant saillie latéralement sur la pièce d'engagement.

5. Conduit selon la revendication 4, **caractérisé en ce que** l'élément de maintien (16) présente une surface d'appui qui, vue dans le sens radial à partir de la tige filetée (14), est située derrière la pièce d'engagement (18) lorsque cette dernière est engagée.

6. Conduit selon la revendication 3, 4 ou 5, **caractérisé en ce que** l'élément de préhension présente un creux de préhension (52), en particulier pour un ou plusieurs doigts humains.

7. Conduit selon au moins l'une des revendications précédentes, **caractérisé en ce que** le filet extérieur de la tige filetée (14) et/ou le filet intérieur (58) de la pièce d'engagement (18) présente(nt) au moins un flanc avec un angle de flanc compris entre 0° et 5°, et plus particulièrement égal à 0°, ou inférieur à 0°.

8. Conduit selon au moins l'une des revendications précédentes, **caractérisé en ce que** le corps de conduit (20) présente au moins un profilé (24) s'étendant dans le sens longitudinal du conduit et possédant au moins une rainure de fixation (26), dans laquelle est fixé l'élément de maintien.

9. Conduit selon au moins l'une des revendications précédentes, **caractérisé en ce que** la pièce d'engagement (18) est guidée le long de l'élément de maintien (16) dans une coulisse longitudinale (46).

10. Conduit selon la revendication 9, **caractérisé en ce que** la coulisse longitudinale (46) est formée de telle sorte que la pièce d'engagement (18) puisse être placé dans ladite coulisse longitudinale (46) et être retiré de ladite coulisse longitudinale (46) par un mouvement perpendiculaire à la direction de déplacement dans cette coulisse longitudinale (46).

11. Conduit selon la revendication 10, **caractérisé en ce que** la coulisse longitudinale (46) présente au moins un rail de guidage faisant saillie latéralement par rapport à une direction de déplacement radiale, et que cette coulisse longitudinale (46) est partiellement enveloppée par des éléments de guidage de la pièce d'engagement, sachant que le rail de guidage faisant saillie latéralement présente au moins un creux pour pouvoir sortir et/ou introduire les éléments de guidage avec la pièce d'engagement (18).
